# DEMANDE DE BREVET EUROPEEN

(11) **EP 4 389 382 A1**
(43) Date de publication de la demande: **26.06.2024**
(21) Numéro de dépôt: 23219734.3
(22) Date de dépôt: 22.12.2023
(51) Int. Cl.: B29B 17/02

(54) **PROCÉDÉ DE TRAITEMENT DE MATIÈRES PLASTIQUES MÉLANGÉES ISSUES DE RÉSIDUS DE BROYAGE**

(30) Priorité: 22.12.2022 BE 202206071
(71) Demandeur: Comet Traitements, 6200 Châtelet (BE)
(72) Inventeur: DEMOULIN, Hervé, 5000 Namur (BE); BAREEL, Pierre-François, 4130 Esneux (BE)
(74) Mandataire: Calysta NV

(57) **Abrégé**

L'invention concerne un procédé avantageux de traitement d'un mélange de matières fragmentées comprenant du PP et/ou PE ainsi que du PS, ABS et/ou FPP et des fragments de bois, le procédé comprenant notamment une étape de séparation par densité, une étape de séparation hydrocyclonique spécifique pour séparer les fragments de bois des fragments de PP et/ou PE, une étape de séparation sélective des fragments de PP et/ou PE, en mélange ou en fractions pures ou pratiquement pures, et une étape de séparation sélective des fragments de PS, ABS et/ou FPP, en mélange ou en fractions pures ou pratiquement pures.

## Description

### Domaine technique

La présente invention se situe dans le domaine du traitement sélectif et du recyclage de matières mélangées et fragmentées, en particulier des matières plastiques, notamment issues de résidus de broyage d'automobiles et/ou d'objets parvenus en fin de vie, en vue de les valoriser.

### Art antérieur

Les résidus de broyage d'automobiles et d'objets de consommation arrivés en fin de vie (notamment des équipements électriques et électroniques) comprennent une multiplicité de matières plastiques (polymères et/ou copolymères), ainsi qu'une multiplicité de matériaux autres que les matières plastiques et considérés comme contaminants dans la récupération, notamment sélective, et le recyclage desdites matières plastiques.

En particulier, de tels résidus de broyage comprennent initialement (suite au premier broyage, par exemple à l'aide d'un broyeur à marteaux, dit « broyeur primaire ») une grande majorité de métaux ferromagnétiques (environ 80%).

De manière connue, ces métaux sont isolés par tri magnétique et le résidu restant (environ 20%) est en général séparé en une « fraction légère » (par exemple, isolée par aspirateur) et une « fraction lourde » qui peut avantageusement être traitée par criblage, les particules les plus grosses (souvent > 100mm) étant à nouveau broyées (dans l'installation de broyage initiale ou dans une autre installation), les particules « fines » (<-10 mm) étant souvent éliminées ou bien traitées et les particules de tailles intermédiaires (-10-1 00mm) étant celles qui vont généralement subir le traitement ultérieur de séparation sélective des plastiques.

La « fraction lourde » des résidus de broyage comprend donc de nombreux matériaux, à l'exception des métaux ferromagnétiques : principalement des matières plastiques, des métaux non-ferreux, des minéraux, du bois, des mousses, des silicones, des textiles et des caoutchoucs.

La récupération des matières plastiques, notamment de façon sélective, en vue de les valoriser, au départ de ladite « fraction lourde » des résidus de broyage requiert dès lors deux étapes principales :
(i) la séparation sélective des matériaux « contaminants » autres que les matières plastiques (suivi de leur élimination ou de leur valorisation après traitement éventuel) ; et
(ii) la séparation sélective du mélange de matières plastiques.

L'un des procédés de séparation connus d'un mélange de matières plastiques issu d'un résidu de broyage consiste à tirer parti de la différence de densités existants entre les plastiques.

Ce type de séparation s'effectue dans un séparateur à l'aide d'une phase liquide de séparation (dont la composition est adaptée afin d'atteindre une densité d, adaptée en fonction des matériaux à séparer) et provoque une séparation des matériaux en deux phases, l'une surnageante/flottante et l'autre décantante/coulante (dans le fond du séparateur).

La phase surnageante est constituée essentiellement des matériaux de densité inférieure à la densité d de la phase liquide utilisée, et la phase décantante est constituée essentiellement des matériaux de densité supérieure à la densité d. Chacune de ces phases forme un flux qui, en général, est soumis à son tour à une nouvelle séparation par densité, pour séparer de façon plus sélective les matériaux plastiques.

Le milieu liquide de séparation peut être formé d'eau, éventuellement complétée d'agents tensio-actifs et/ou des sels solubles et/ou de composés minéraux insolubles, afin de faire varier sa densité.

Ainsi, il est particulièrement connu de traiter un mélange de matières plastiques par séparation par densité, en utilisant une densité de 1 (la phase liquide de séparation étant de l'eau), ce qui provoque la séparation des matériaux du mélange en deux flux :
- un premier flux de densité inférieure à 1, comprenant notamment et par exemple le polyéthylène ou PE (en particulier, les PEHD, d=0,92 à 0,95), le polypropylène ou PP (d autour de 0,9) et les mousses (par ex., PE, PP et/ou PU) ; et
- un deuxième flux de densité supérieure ou égale à 1, comprenant notamment et par exemple :
   - le PS (polystyrène) ; d ~ 1,05-1,06
   - l'ABS (copolymère acrylonitrile-butadiène-styrène) ; d ~1,05-1,07)
   - le FPP (polypropylène chargé en minéraux tel que le talc) ; d ~ 1,05.

Ces deux flux comprennent encore notamment la fraction « bois » contaminante présente dans le mélange de matières fragmentées initiales.

Or, cette fraction « bois » est considérée dans le monde de la plasturgie comme un réel poison pour les matières plastiques et ne peut en aucun cas se retrouver en fin de procédé de séparation dans les fractions plastiques à valoriser, qu'elles soient en mélange ou sous forme individuelle/pure.

Pourtant, cette fraction « bois » contaminante reste problématique à isoler des matières plastiques, via une méthode classique de séparation par densité (du fait de sa densité proche de celles des matières plastiques en présence, en particulier pour le premier flux ci-dessus comprenant le PP et/ou le PE) ou via d'autres méthodes connues de séparation.

Quelques solutions ont néanmoins été proposées dans l'art antérieur mais elles ne sont pas considérées comme satisfaisantes en terme d'efficacité et/ou de facilité de mise en oeuvre. Elles demandent généralement un nombre d'étapes opérationnelles élevé et sont souvent délicates à gérer.

En particulier, il est connu du document WO2012/017139A1 d'isoler la fraction « bois » par une technique de séparation par densité classique, mais en prévoyant d'imbiber/imprégner au préalable le bois d'eau afin d'en augmenter sa densité et de le faire couler dans un liquide de densité égale à 1,1. Toutefois, une telle étape de mouillage/« densification » des fragments bois est une opération très lente, l'eau devant s'infiltrer dans la porosité très fine du bois. Vu la lenteur de ce processus d'imprégnation du bois, cette étape de mouillage nécessite donc l'immobilisation des déchets à traiter pendant une longue période et elle ne peut donc faire partie d'un processus de traitement continu (ou en ligne), car cela le rendrait beaucoup trop lent et peu rentable. De plus, ce mouillage entraîne le blocage d'un ou plusieurs espace(s) significatif(s) de stockage sur le site industriel, pendant de longues périodes. Finalement, en principe, le mouillage se fait par aspersion d'eau sur les déchets en tas, ce qui nécessite de grands volumes d'eau (ou des systèmes de récupération de l'eau).

Par conséquent, il serait d'un intérêt tout particulier de disposer d'un procédé de traitement de résidus de broyage d'automobiles et/ou d'objets parvenus en fin de vie, comprenant des matières plastiques mélangées (en particulier de densité inférieure à 1) ainsi que des matières dites « contaminantes » comme le bois, qui permette une séparation de la fraction « bois » qui soit rapide, efficace, peu consommatrice de ressources et possible en ligne, tout en fournissant, après traitement de séparation sélective, des fractions de matières plastiques, en mélange ou en fractions pures ou pratiquement pures, aptes à être valorisées.

### Objectifs de l'invention

Un objectif de la présente invention est de surmonter les problèmes de l'état de la technique décrits ci-dessus.

En particulier, un objectif de l'invention est de fournir un procédé permettant d'isoler/éliminer de façon efficace, au départ d'un mélange de matières fragmentées provenant notamment du broyage de véhicules automobiles et/ou d'autres objets en fin de vie, les fragments de bois contaminants des matières plastiques en présence, tout en fournissant, après traitement de séparation sélective, des fractions de matières plastiques, en mélange ou en fractions pures ou pratiquement pures, aptes à être valorisées.

Encore un autre objectif de l'invention est de fournir un procédé permettant d'isoler, au départ d'un mélange de matières fragmentées provenant notamment du broyage de véhicules automobiles et/ou d'autres objets en fin de vie, les fragments de bois contaminants des matières plastiques en présence, qui est efficace, facile à mettre en oeuvre, rapide et en ligne avec les autres étapes du procédé de traitement global.

Finalement, un autre objectif de la présente invention est de fournir un procédé permettant d'isoler, au départ d'un mélange de matières fragmentées provenant notamment du broyage de véhicules automobiles et/ou d'autres objets en fin de vie, les fragments de bois contaminants des matières plastiques en présence, qui est économique et respectueux de l'environnement, en particulier qui nécessite peu ou moins de ressources naturelles comme l'eau.

### Description détaillée de l'invention

Pour atteindre ces objectifs, il est prévu suivant l'invention un procédé de traitement d'un mélange de matières fragmentées dont la plus grande dimension est d'au plus 150 mm, provenant notamment du broyage de véhicules automobiles et/ou d'autres objets en fin de vie, la densité de chacune des matières du mélange étant inférieure ou égale à 1,8, et ledit mélange de matières fragmentées, constituant le flux entrant, comprenant (i) des fragments de matières plastiques comprenant au moins l'un parmi le PP et le PE et au moins l'un parmi le PS, l'ABS et le FPP et (ii) des fragments de bois, ledit procédé comprenant les étapes suivantes:
(a) une étape **A** de séparation par densité, au cours de laquelle ledit mélange de matières fragmentées est introduit dans un milieu liquide de densité égale à 1, et est séparé en un flux ***a1*** surnageant contenant les fragments de matières de densité inférieure ou égale à 1 dont le PP et/ou le PE et des fragments de bois, et en un flux ***a2*** décantant contenant les fragments de matières de densité supérieure à 1 dont le PS, l'ABS et/ou le FPP;
(b) une étape **B** de traitement du flux ***a1*** selon les étapes suivantes, dans l'ordre :
   - une granulation des matières à une taille maximale définie entre 10 et 14 mm, et
   - un lavage à l'eau,
   générant un flux ***b1*** constitué d'une suspension des matières fragmentées en présence dans l'eau dudit lavage ;
(c) une étape **C** de séparation au cours de laquelle le flux ***b1*** est introduit dans un séparateur hydrocyclonique (1) comprenant une section cylindrique (2) connectée à une section conique (3), et
   - la section cylindrique (2) étant munie d'un système d'alimentation tangentielle (4) du flux ***b1*** sous une pression **P** comprise entre 0,9 et 1,2 bar et d'une sortie supérieure (5) située à son extrémité supérieure,
   - la section conique (3) étant munie d'une sortie inférieure (6) située à son extrémité inférieure et de diamètre **Δ**,
   - ledit séparateur (1) étant dimensionné de telle sorte que le rapport R entre la hauteur H totale des sections cylindrique (2) et conique (3) et le diamètre Δ est compris entre 12 et 20 ;
   ladite étape **C** générant, par la sortie supérieure (5), un flux ***c1*** comprenant les fragments de PP et/ou de PE et, par la sortie inférieure (6), un flux **c2** comprenant les fragments de bois ;
(d) une étape **D** de traitement du flux ***c1*** afin de séparer sélectivement les fragments de PP et/ou de PE, en mélange ou en fractions pures ou pratiquement pures ; et
(e) une étape **E** de traitement du flux ***a2*** afin de séparer sélectivement les fragments de PS, ABS et/ou FPP, en mélange ou en fractions pures ou pratiquement pures.

L'invention est ainsi basée sur une approche nouvelle et inventive. En effet, les inventeurs ont découvert, de manière surprenante, qu'en utilisant une séparation hydrocyclonique spécifique et consécutive à (i) une étape de séparation classique par densité (à d=1) et (ii) une étape de traitement spécifique (granulation, lavage), il était possible de séparer rapidement et efficacement les fragments de bois des fragments de plastiques en présence (en particulier, le PP et/ou le PE), notamment en évitant une étape lente de « mouillage » par aspersion d'eau ou par immersion et en évitant une trop grande consommation de ressources naturelles comme l'eaulesdites matières plastiques pouvant ensuite être traitées par séparation sélective.

Ceci est surprenant dans la mesure où la séparation hydrocyclonique est connue à ce jour pour séparer des matières de densités très différentes (ce qui n'est pas le cas du bois face à certaines matières plastiques telles que le PP et/ou le PE).

En effet, le principe de la séparation cyclonique est d'utiliser la pression du fluide entrant (suspension de particules solides dans un liquide, également appelée « pulpe d'alimentation ») pour générer une force centrifuge et un « vortex» (ou « cyclone ») qui peut séparer des particules solides entre elles ou des particules solides d'un milieu liquide (à la manière d'une filtration). Les éléments à séparer (particules-particules ou particules-liquide) doivent avoir une densité suffisamment différente pour que la séparation se réalise. Dans ce procédé, le vortex est créé grâce à l'injection tangentielle de la pulpe/suspension d'alimentation dans une section cylindrique à une pression donnée. La pulpe entre en rotation autour de l'axe longitudinal de la section cylindrique alors que se crée un tourbillon descendant vers une section conique, emportant les particules les plus denses (appelés également « sédiments ») vers une sortie située à l'extrémité inférieure de cette section conique (également appelée « buse » ou « sortie inférieure »). Il se crée également un second tourbillon à trajectoire ascendante, qui contient les particules moins denses (et une grande partie du milieu liquide) qui sont conduites par ce tourbillon ascendant vers une sortie située à l'extrémité supérieure du séparateur, dans sa section cylindrique (ou « sortie supérieure »).

Ainsi, en pratique, la séparation hydrocyclonique est utilisée communément pour séparer des matières minérales « lourdes » de l'eau (comme le sable ou des minerais en général) ou bien, plus en lien avec l'invention, pour séparer entre elles des matières plastiques de densités très différentes. Par exemple, cette technique de séparation est présentée dans la littérature comme efficace pour effectuer la séparation du mélange de plastiques PE (d~0,92-0,95) / PP (d~0,9) / PET (d~1.4), mélange typiquement présent dans les résidus de broyage de bouteilles en plastique. Au cours d'une telle séparation hydrocyclonique, les fragments de PE et PP, de plus faibles densités, sont récupérés par la sortie située à l'extrémité supérieure du séparateur et les fragments de PET, plus denses, sont évacués et récoltés par la sortie située à l'extrémité inférieure du séparateur.

L'utilisation d'une séparation du type hydrocyclonique n'est dès lors pas la méthode vers laquelle on s'est naturellement tourné jusqu'ici dans le domaine du traitement/recyclage de résidus de broyage pour séparer sélectivement des fragments de matériaux dont les densités sont très proches, à savoir pour séparer des fragments de bois d'une part et des fragments de plastiques du type PP et PE (en particulier, PEHD). d'autre part.

D'autres caractéristiques, détails et avantages de l'invention ressortiront de la description et des figures données ci-après, à titre non limitatif. En particulier :
La figure 1 montre un organigramme illustrant les étapes du procédé selon l'invention.
La figure 2 schématise un séparateur hydrocyclonique utilisé dans le procédé selon l'invention.

Dans la présente description et les revendications, il est bien entendu que les termes « un », « une » ou « le » signifient « au moins un » et ne doivent pas être limités à « un seul », sauf indication contraire explicite, De plus, lorsqu'une plage de valeur est indiquée, les extrémités sont incluses. Finalement, toutes les valeurs intégrales et de sous-domaine dans une gamme/plage numérique sont expressément incluses comme si explicitement écrites.

Selon l'invention, ledit mélange de matières fragmentées, constituant le flux entrant, provient notamment du broyage de véhicules automobiles et/ou d'autres objets en fin de vie. Ledit mélange de matières fragmentées comprend (i) des fragments de matières plastiques comprenant au moins l'un parmi le PP et le PE et au moins l'un parmi le PS, l'ABS et le FPP et (ii) des fragments de bois. Si le mélange de matières fragmentées provient du broyage de véhicules automobiles et d'autres objets en fin de vie (notamment des équipement électriques et électroniques), il contient fréquemment du PP, du PE, du PS, de l'ABS et du FPP.

Ledit mélange de matières fragmentées selon l'invention peut comprendre en outre d'autres matières telles que des caoutchoucs, des silicones, d'autres plastiques tels que du PVC, du PMMA, du PC, du PA, etc.

Selon l'invention et comme communément admis dans le domaine, on entend par :
- PP, les plastiques du type polypropylène ;
- PE, les plastiques du type polyéthylène (en particulier, le PEHD) ;
- PS, les plastiques du type polystyrène ;
- ABS, les plastiques du type copolymère acrylonitrile-butadiène-styrène ;
- FPP, les plastiques du type polypropylène chargé en minéraux tel que le talc.

Selon l'invention, lesdites matières fragmentées ont leur plus grande dimension d'au plus 150 mm, de préférence d'au plus 100 mm. De préférence également, lesdites matières fragmentées ont leur plus grande dimension d'au moins 2 mm et, préférentiellement, d'au moins 3 mm.

De plus, selon l'invention, la densité de chacune des matières fragmentées du mélange est inférieure ou égale à 1,8.

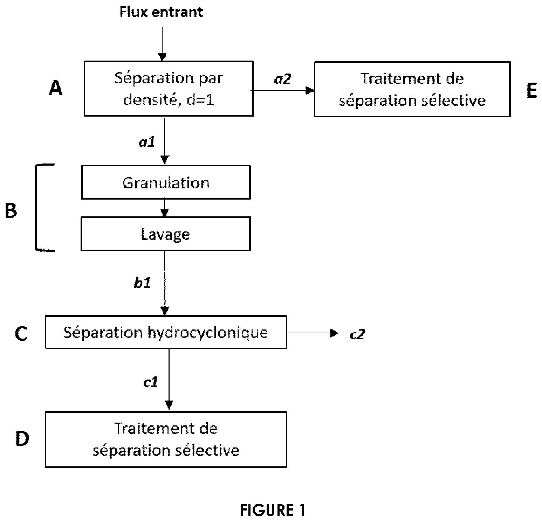

Selon le procédé de l'invention et tel qu'illustré à la figure 1, ledit mélange de matières fragmentées, ou flux entrant, subit une première étape **A** de séparation par densité, au cours de laquelle ledit mélange est introduit dans un milieu liquide de densité égale à 1 (notamment de l'eau), et est séparé en un flux ***a1*** surnageant contenant les fragments de matières de densité inférieure ou égale à 1 dont le PP et/ou le PE et des fragments de bois, et en un flux ***a2*** décantant contenant les fragments de matières de densité supérieure à 1 dont le PS, l'ABS et/ou le FPP.

Selon cette étape, le flux ***a1*** surnageant contient les fragments de PP et/ou de PE et les fragments de bois, et le flux ***a2*** décantant contient les fragments de PS, l'ABS et/ou le FPP.

Comme connu dans le domaine du traitement et recyclage en général, et le domaine du traitement et recyclage des plastiques en particulier, les flux générés lors d'une étape de séparation ne sont jamais purs, et une étape de séparation au sens large constitue plutôt une concentration (plus ou moins importante et efficace) d'au moins un composant dans un des deux flux.

Dans le cas présent, le flux ***a1*** comprend l'essentiel des fragments de PP et/ou PE, mais une partie peut néanmoins se retrouver dans le flux ***a2*** sans que cela ne sorte du périmètre de l'invention.

De même, le flux ***a2*** comprend l'essentiel des fragments de PS, ABS et/ou FPP, mais une partie de ces fragments peut néanmoins se retrouver dans le flux ***a1*** sans que cela ne sorte du périmètre de l'invention.

De plus, le flux ***a2*** peut également comprendre des fragments de bois, sans que cela ne sorte du périmètre de l'invention.

Par souci de clarté toujours, le flux ***a1*** correspond donc à une concentration du flux entrant en fragments de PP et/ou PE, et le flux ***a2*** correspond à une concentration du flux entrant en fragments de PS, ABS et/ou FPP.

Selon l'invention et tel qu'illustré à la figure 1, le procédé comprend en outre une étape **B** de traitement du flux ***a1*** selon les étapes suivantes, dans l'ordre :
- une granulation à une taille maximale définie entre 10 et 14 mm, et
- un lavage à l'eau.

Ces deux étapes consécutives, granulation-lavage, permettent de générer un nouveau flux ***b1*** constitué d'une suspension des matières fragmentées en présence dans l'eau dudit lavage. Ce flux ***b1*** constituera la « pulpe d'alimentation » dans l'étape suivante de séparation hydrocyclonique. Il est donc implicite que l'invention permet de s'affranchir des étapes habituelles de rinçage à l'eau et d'égouttage après le cycle de granulation/lavage. Ceci est avantageux dans le mesure où cela réduit le nombre d'étapes du procédé et cela nécessite moins de ressources naturelles tel que l'eau.

En particulier, la granulation à une taille maximale définie entre 10 et 14 mm selon l'étape **B** de l'invention peut se faire à l'aide d'un granulateur, notamment un granulateur à couteaux muni d'une grille appropriée (présentant des ouvertures ou trous de taille correspondant à ladite taille maximale).

De préférence, la granulation selon l'étape **B** est à une taille maximale définie entre 12 et 14 mm.

De préférence, le lavage selon l'étape **B** est opéré par frictions, notamment à froid. Par exemple, un appareillage industriel du type « turbo-washer » peut être utilisé.

Selon l'invention et tel qu'illustré à la figure 1, le procédé comprend en outre une étape **C** de séparation au cours de laquelle le flux ***b1*** est introduit dans un séparateur hydrocyclonique.

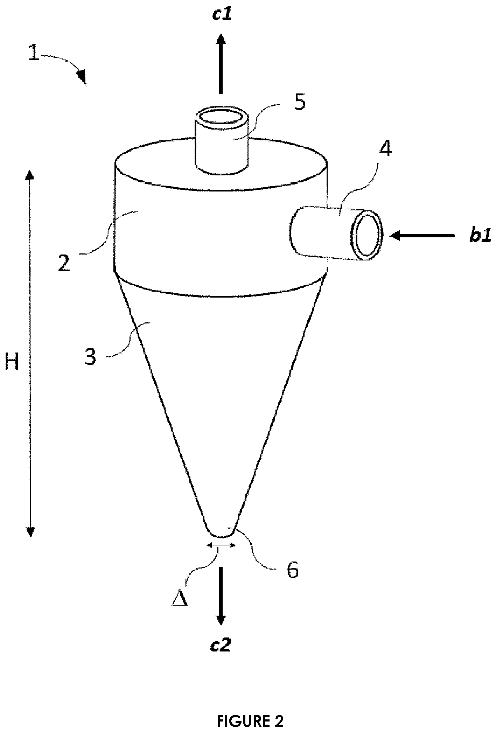

Un séparateur hydrocyclonique selon l'invention est illustré schématiquement à la Figure 2.

Le séparateur hydrocyclonique (1) selon l'invention comprend une section cylindrique (2) connectée à une section conique (3).

Dans le séparateur hydrocyclonique (1) selon l'invention, la section cylindrique (2) est munie d'un système d'alimentation tangentielle (4) du flux ***b1*** sous pression et d'une sortie supérieure (5) située à son extrémité supérieure. La pression P d'alimentation du flux ***b1*** selon le procédé de l'invention est comprise entre 0,9 et 1,2 bar.

De plus, dans le séparateur hydrocyclonique (1) selon l'invention, la section conique (3) est munie d'une sortie inférieure (6) située à son extrémité inférieure et de diamètre Δ. De préférence, le diamètre Δ de ladite sortie inférieure (6) est compris entre 7 et 10 cm. De manière plus préférée, le diamètre Δ est compris entre 8 et 9 cm.

Selon l'invention, le séparateur hydrocyclonique (1) est dimensionné de telle sorte que le rapport R entre la hauteur totale H des sections cylindrique (2) et conique (3) et le diamètre Δ (ou H/Δ) est compris entre 12 et 20. De préférence, le rapport R est supérieur ou égal à 14. De préférence également, il est inférieur ou égal à 19. De manière toute préférée, il est compris entre 15 et 18.

L'étape **C** de l'invention est telle qu'elle génère par la sortie supérieure (5), un flux ***c1*** comprenant les fragments de PP et/ou de PE et, par la sortie inférieure (6), un flux ***c2*** comprenant les fragments de bois. En effet, l'ensemble des caractéristiques et paramètres précités pour l'étape **C** et le séparateur hydrocyclonique (pression, dimensions, etc.) ainsi que les étapes préalables (notamment la granulation) concourent à séparer rapidement, efficacement et de manière surprenante, les fragments de bois des fragments de PP et/ou PE en présence.

De nouveau et pour rappel, comme entendu dans le domaine du traitement et du recyclage de matières en général, et le domaine du traitement et du recyclage des plastiques en particulier, les flux générés lors d'une étape de séparation ne sont jamais purs, et une étape de séparation au sens large constitue plutôt une concentration (plus ou moins importante et efficace) d'au moins un composant dans un des deux flux.

Ainsi, le flux **c1** comprend l'essentiel des fragments de PP et/ou PE présents initialement dans le flux ***b1***, mais une partie peut néanmoins se retrouver dans le flux **c2** sans que cela ne sorte du périmètre de l'invention.

De même, le flux **c2** comprend l'essentiel des fragments de bois présents initialement dans le flux ***b1*,** mais une partie de ces fragments peut néanmoins se retrouver dans le flux ***a1*** sans que cela ne sorte du périmètre de l'invention.

Par souci de clarté toujours, le flux ***c1*** correspond donc à une concentration du flux ***b1*** en fragments de PP et/ou PE, et le flux ***c2*** correspond à une concentration du flux ***b1*** en fragments de bois.

Selon un mode de réalisation avantageux de l'invention, le procédé comprend en outre, après l'étape **C** et avant l'étape **D,** une étape de lavage et/ou une étape de séchage, notamment mécanique, du flux **cJ.** En particulier, cette étape de lavage est opérée par frictions, notamment à froid.

Selon l'invention et tel qu'illustré à la figure 1, le procédé comprend en outre une étape **D** de traitement du flux ***c1*** afin de séparer sélectivement les fragments de PP et/ou de PE, en mélange ou en fractions pures ou pratiquement pures.

L'étape **D** de traitement du flux ***c1*** selon l'invention permet de concentrer encore davantage les fragments de PP et/ou de PE (qui seront alors en mélange) et/ou de les séparer sélectivement en fractions pures ou pratiquement pures (le PE, d'une part et le PP, d'autre part).

L'étape **D** de traitement du flux ***c1*** peut comprendre plusieurs étapes choisies parmi : séparation par densité, séparation aéraulique, séparation électrostatique, lavage, broyage, mouillage, tri de forme, tri optique, séchage. Ces étapes, lorsqu'elles sont mises en oeuvre, peuvent être répétées plusieurs fois, à l'identique ou avec des variantes, au cours du traitement de l'étape **D.**

Le mélange de PP/PE ou leur fraction pure/pratiquement pure respective peut ainsi être valorisé, c'est-à-dire ré-utilisé dans la fabrication de nouveaux objets à base de plastiques.

Selon l'invention et tel qu'illustré à la figure 1, le procédé comprend en outre une étape **E** de traitement du flux ***a2*** afin de séparer sélectivement les fragments de PS, ABS et/ou FPP, en mélange ou en fractions pures ou pratiquement pures, par exemple comprenant au moins 95%, voire au moins 96 ou 97 ou 98 % de PS, ou d'ABS ou de PP.

L'étape **E** de traitement du flux ***a2*** selon l'invention permet de concentrer encore davantage les fragments de PS, ABS et/ou de FPP (qui seront alors en mélange) et/ou de les séparer sélectivement en fractions pures ou pratiquement pures.

L'étape **E** de traitement du flux ***a2*** selon l'invention peut comprendre plusieurs étapes choisies parmi : séparation par densité, séparation aéraulique, séparation électrostatique, lavage, broyage, mouillage, tri de forme, tri optique, séchage. Ces étapes, lorsqu'elles sont mises en oeuvre, peuvent être répétées plusieurs fois, à l'identique ou avec des variantes, au cours du traitement de l'étape **E.**

Le mélange de PS/ABS/FPP ou leur fraction pure/pratiquement pure respective peut ainsi être valorisé, c'est-à-dire ré-utilisé dans la fabrication de nouveaux objets à base de plastiques.

Finalement, l'invention concerne également l'utilisation d'un séparateur hydrocyclonique (1) comprenant une section cylindrique (2) connectée à une section conique (3), pour séparer un mélange de matières fragmentées, provenant notamment du broyage de véhicules automobiles et/ou d'autres objets en fin de vie, comprenant des fragments de matières plastiques et des fragments de bois, en deux flux :
- le premier flux comprenant les fragments de bois,
- le deuxième flux comprenant les fragments de matières plastiques.

Selon un mode de réalisation de l'utilisation de l'invention, le séparateur hydrocyclonique est utilisé pour séparer un mélange de matières fragmentées comprenant des fragments de matières plastiques comprenant au moins l'un parmi le PP et le PE et des fragments de bois, en deux flux :
- le premier flux comprenant les fragments de bois et étant récupéré à la sortie inférieure (6) de la section conique (3), et
- le deuxième flux comprenant les fragments de PP et/ou PE et étant récupéré à la sortie supérieure (5) de la section cylindrique (2).

Comme déjà expliqué plus haut, ledit premier flux comprend l'essentiel des fragments de bois présents initialement, mais une partie de ces fragments peut néanmoins se retrouver dans le deuxième flux sans que cela ne sorte du périmètre de l'invention. De même, le deuxième flux comprend l'essentiel des fragments de PP et/ou PE présents initialement, mais une partie peut néanmoins se retrouver dans le premier flux sans que cela ne sorte du périmètre de l'invention. Le premier flux correspond donc à une concentration en fragments de bois et le deuxième flux correspond à une concentration en fragments de PP et/ou PE.

D'autres déchets, tels que des déchets industriels ou ménagers contenant également des matières plastiques mélangées en présence de fragments de bois contaminants, peuvent être considérés dans l'invention.

Il est bien entendu que la présente invention n'est en aucune façon limitée aux formes de réalisations décrites ci-dessus et que des modifications peuvent y être apportées sans sortir du cadre des revendications. Il est en outre entendu que l'invention englobe également toutes les combinaisons possibles de caractéristiques et de caractéristiques préférées, décrites ici et citées dans les revendications.

De plus, l'exemple suivant est fourni à des fins d'illustration et n'est pas destiné à limiter la portée de la présente invention.

### Exemple

On a traité selon le procédé de l'invention un flux de matières fragmentées provenant d'un résidu de broyage d'automobiles et d'autres objets en fin de vie.

Le résidu de broyage initial (provenant du broyeur primaire) a préalablement subi différentes étapes/traitements avant d'être traité par le procédé de l'invention.

Ainsi, à la sortie du broyeur primaire, le résidu de broyage a été traité par aspirateur afin d'éliminer les matériaux très légers (« fraction légère », appelés également «fluffs») et délesté de ses métaux ferreux/ferromagnétiques, de manière connue, par un traitement magnétique classique et/ou par courant de Foucault. La « fraction lourde » ainsi obtenue a ensuite été passée au crible afin d'isoler les fragments de tailles 3 - 100 mm.

Cette fraction a ensuite été traitée par une étape de flottation dans un milieu liquide de densité égale à 1,8 afin de récupérer la fraction flottante, qui a été finalement lavée à l'eau dans un tambour.

Le flux de matières fragmentées ainsi obtenu comprend des matières plastiques (notamment PP, PE, PS, ABS et FPP) et du bois.

Le procédé de traitement selon l'invention a ainsi été alimenté de ce flux (appelé « flux entrant » dans la présente invention).

Premièrement, ce flux entrant a été introduit dans de l'eau dans un séparateur par densité classique courant du type « sink float tank ». On a isolé le flux surnageant/flottant (ou flux ***a1***), d'une part et le flux coulant (ou flux ***a2***), d'autre part.

Ensuite, le flux surnageant (***a1***) a été transporté vers un granulateur à couteaux muni d'une grille à ouverture de 12mm, et le granulat obtenu a été lavé à l'eau dans un « turbo-washer» classique.

La suspension de matières dans l'eau de lavage obtenue suite à cette étape (ou flux ***b1***) a ensuite été alimentée sous une pression d'environ 1,1 bar et un débit situé entre 70 et 100 m³/h dans un séparateur hydrocyclonique de type conique (présentant une section cylindrique avec une sortie supérieure et une section conique avec une sortie inférieure), via un système d'alimentation tangentielle prévu dans la section cylindrique.

Le séparateur présentait une hauteur totale des sections cylindrique et conique de 143 cm et un diamètre de la sortie située à l'extrémité inférieure de la section conique de 8 cm.

En sortie inférieure du séparateur hydrocyclonique a été récupéré un flux (***c2***) comprenant l'essentiel des fragments de bois. En sortie supérieure a été récupéré un flux (***c1***) comprenant l'essentiel des fragments de matières plastiques PP et PE.

Ensuite, le flux ***c1*** a été lavé par frictions à froid et ensuite séché mécaniquement. Ce nouveau flux sec a finalement été traité de manière connue afin de récupérer un mélange de PP/PE qui pourra être valorisé ultérieurement.

Finalement, le flux coulant (***a2***) obtenu dans le séparateur par densité a été traité de manière connue afin de séparer sélectivement le PS, l'ABS et le FPP en fraction pratiquement pures, qui pourront être valorisées ultérieurement.

## Revendications

1. Procédé de traitement d'un mélange de matières fragmentées dont la plus grande dimension est d'au plus 150 mm, provenant notamment du broyage de véhicules automobiles et/ou d'autres objets en fin de vie, la densité de chacune des matières du mélange étant inférieure ou égale à 1,8, et ledit mélange de matières fragmentées, constituant le flux entrant, comprenant (i) des fragments de matières plastiques comprenant au moins l'un parmi le PP et le PE et au moins l'un parmi le PS, l'ABS et le FPP et (ii) des fragments de bois, ledit procédé comprenant les étapes suivantes:
(a) une étape **A** de séparation par densité, au cours de laquelle ledit mélange de matières fragmentées est introduit dans un milieu liquide de densité égale à 1, et est séparé en un flux ***a1*** surnageant contenant les fragments de matières de densité inférieure ou égale à 1 dont le PP et/ou le PE et des fragments de bois, et en un flux ***a2*** décantant contenant les fragments de matières de densité supérieure à 1 dont le PS, l'ABS et/ou le FPP;
(b) une étape **B** de traitement du flux ***a1*** selon les étapes suivantes, dans l'ordre :
- une granulation des matières à une taille maximale définie entre 10 et 14 mm, et
- un lavage à l'eau,
générant un flux ***b1*** constitué d'une suspension des matières fragmentées en présence dans l'eau dudit lavage ;
(c) une étape **C** de séparation au cours de laquelle le flux ***b1*** est introduit dans un séparateur hydrocyclonique (1) comprenant une section cylindrique (2) connectée à une section conique (3), et
- la section cylindrique (2) étant munie d'un système d'alimentation tangentielle (4) du flux ***b1*** sous une pression **P** comprise entre 0,9 et 1,2 bar et d'une sortie supérieure (5) située à son extrémité supérieure,
- la section conique (3) étant munie d'une sortie inférieure (6) située à son extrémité inférieure et de diamètre **Δ ,**
- ledit séparateur (1) étant dimensionné de telle sorte que le rapport R entre la hauteur H totale des sections cylindrique (2) et conique (3) et le diamètre Δ est compris entre 12 et 20 ;
ladite étape **C** générant, par la sortie supérieure (5), un flux ***c1*** comprenant les fragments de PP et/ou de PE et, par la sortie inférieure (6), un flux **c2** comprenant les fragments de bois ;
(d) une étape **D** de traitement du flux ***c1*** afin de séparer sélectivement les fragments de PP et/ou de PE, en mélange ou en fractions pures ou pratiquement pures ; et
(e) une pple

2. Procédé selon la revendication 1, **caractérisé en ce qu'**il comprend en outre, après l'étape **C** et avant l'étape **D,** une étape de lavage et/ou une étape de séchage du flux ***c1***.

3. Procédé selon l'une des revendications précédentes, **caractérisé en ce que** les dites matières fragmentées ont leur plus grande dimension d'au plus 100 mm.

4. Procédé selon l'une des revendications précédentes, **caractérisé en ce que** les dites matières fragmentées ont leur plus grande dimension d'au moins 2 mm et, de préférence, d'au moins 3 mm.

5. Procédé selon l'une des revendications précédentes, **caractérisé en ce que** ladite granulation des matières est à une taille maximale définie à 12 mm.

6. Procédé selon l'une des revendications précédentes, **caractérisé en ce que** ledit rapport R est compris entre 15 et 18.

7. Procédé selon l'une des revendications précédentes, **caractérisé en ce que** ledit diamètre Δ de ladite sortie inférieure (6) est compris entre 7 et 10 cm et, de préférence, entre 8 et 9 cm.

8. Procédé selon l'une des revendications précédentes, **caractérisé en ce que**, à l'étape **B,** le lavage est opéré par frictions, notamment à froid.
